# EUROPÄISCHE PATENTSCHRIFT

(11) **EP 1 444 123 B1**
(45) Veröffentlichungstag und Bekanntmachung des Hinweises auf die Patenterteilung: **26.04.2006**
(21) Anmeldenummer: 02787357.9
(22) Anmeldetag: 12.11.2002
(51) Int. Cl.: B62D 29/00, B60G 7/00

(54) **KRAFTVERBINDUNGSSTREBE**
FORCE STRUT BRACE
JAMBE DE FORCE

(30) Priorität: 13.11.2001 DE 10155490
(43) Veröffentlichungstag der Anmeldung: 11.08.2004
(73) Patentinhaber: ZF Lemförder Metallwaren AG, 49441 Lemförde (DE)
(72) Erfinder: BUDDE, Frank, 49401 Damme (DE); KRUSE, Jochen, 49088 Osnabrück (DE); SCHÖNHOFF, Stefan, 49191 Belm (DE)
(86) Internationale Anmeldenummer: PCT/DE2002/004197
(87) Internationale Veröffentlichungsnummer: WO 2003/042023

(56) Entgegenhaltungen:
- EP-A- 0 995 668
- DE-A- 10 110 492
- US-A1- 2002 160 145

## Beschreibung

Die Erfindung betrifft eine Kraftverbindungsstrebe eines Fahrwerks eines Kraftfahrzeuges mit einem länglichen Grundkörper und mindestens zwei endständigen Lageraufnahmen zur Ein- und Ausleitung von Kräften.

Derartige Fahrwerksteile sind allgemein bekannt und können als Verbindung zwischen dem Chassis und dem Radträger oder auch als Achsstrebe beziehungsweise Fahrwerkslenker eingesetzt werden. Beispielhaft wird auf die Schriften DE 41 20 772 C2, DE 33 32 771 C2 und DE 199 31 079 A1 verwiesen.

Bei den oben genannten Schriften handelt es sich jeweils um kraftübertragende Fahrwerksteile, die im Wesentlichen aus einem länglichen Grundkörper und endständigen Lageraufnahmen mit Lagerungen bestehen. Die Lageraufnahmen und Lagerungen sind in diesen Fällen zwar aus Verbundwerkstoffen, das heißt einer Kombination aus Metallen und Kunststoffanteilen herstellt, jedoch besteht der längliche Grundkörper durchweg aus Metall.
Im Laufe der Entwicklung hat sich gezeigt, dass die genannten Fahrwerksteile, deren Grundkörper meist aus geschmiedetem Stahl oder Grauguß hergestellt ist, bezüglich seiner Materialeigenschaften den gestiegenen Forderungen nicht mehr hinreichend gerecht wird, wobei auch bezüglich der Gewichtseinsparung die Möglichkeiten bei reinen Metallgrundkörpern ausgereizt sind.

Teilweise wird zur Gewichtsoptimierung anstelle eines reinen Metallgrundkörpers auch ein reiner Kunststoffgrundkörper verwendet, jedoch bergen derartige Fahrwerksteile das Problem, dass die eingesetzten Kunststoffe in der Regel zu Sprödbruch neigen. Das bedeutet, dass nach einer Schädigung eines solchen Fahrwerksteils die Funktion dieser Fahrwerksteile zu 100 % verloren geht, während beispielsweise bei aus Metall hergestellten Fahrwerksteilen zwar eine Verbiegung und Verformung entsteht, jedoch kein vollständiger Funktionsausfall stattfindet.

Es sind zwar aus der Literatur, beispielsweise aus der Offenlegungsschrift DE 38 39 855 A1, Verbundwerkstoffe auf der Basis von Blech-/Kunststoffkombinationen im Automobilbau bekannt. Allerdings handelt es sich bei den dort vorgeschlagenen Anwendungen um Strukturteile für Kraftfahrzeugtüren, Stoßfänger, Träger, Front- und Heckschalen beziehungsweise Türschweller, bei denen die die äußere Form bestimmenden Stahlblechteile durch Kunststoffverrippungen eine erhöhte Festigkeit beziehungsweise Steifigkeit aufweisen sollen. Keine dieser vorgeschlagenen Leichtbauteile sind jedoch dafür geeignet, massive Druck-/Zugkräfte wie sie bei Fahrwerksteilen auftreten aufzunehmen.

Es ist daher Aufgabe der Erfindung eine Kraftverbindungsstrebe eines Fahrwerks für einen Personen- oder Nutzkraftwagen zu entwickeln, welcher einerseits die Gewichtsvorteile von Kunststoffelementen aufweist, andererseits jedoch auch bei einer Beschädigung nicht zu einem sofortigen Totalverlust seiner Funktion führt.

Diese Aufgabe wird durch die Merkmale des unabhängigen Patentanspruches 1 gelöst. Vorteilhafte Weiterbildungen der Erfindung sind Gegenstand untergeordneter Ansprüche.

Demgemäss schlagen die Erfinder vor, den Aufbau einer Kraftverbindungsstrebe eines Fahrwerks eines Kraftfahrzeuges mit einem länglichen Grundkörper und mindestens zwei endständigen Lageraufnahmen zur Ein- und Ausleitung von Kräften auszustatten, wobei der Grundkörper aus wenigstens einem Element aus Kunststoff und mindestens einem Element aus Metall zusammengesetzt ist und die Verbindung zwischen den Metallelementen und den Kunststoffelementen durch eine Umformung zumindest eines Teils der Kunststoffelemente bewirkt wird.

Durch diesen Aufbau einer Kraftverbindungsstrebe kann erreicht werden, dass die Kraftverbindungsstrebe bei gleicher Kraflübertragungsfähigkeit gegenüber den massiven reinen Metallstreben einerseits einen wesentlichen Gewichtsvorteil übernimmt, andererseits durch den Einsatz von Metallelementen auch bei Schädigungen der Kunststoff-Struktur einen sofortigen Totalverlust seiner Funktion vermeidet.

Besonders vorteilhaft ist es hierbei, wenn mindestens ein Metallelement den Abstand zwischen mindestens zwei Lageraufnahmen überbrückt, vorzugsweise sich über mindestens eine, vorzugsweise alle, Lageraufnahmen erstreckt.

Die Umformung eines Teils der Kunststoffelemente, die die Kunststoffelemente mit den Metallelementen verbindet, kann beispielsweise durch Ultraschallnieten oder Ultraschallschweißen erzeugt werden.

Bei den Verbindungen zwischen einem Metallelement und einem Kunststoffelement mit Hilfe von Ultraschallnieten kann vorteilhaft das Kunststoffelement einen Kunststoffzapfen aufweisen, der durch eine Aussparung im Metall von einer Seite her durchgeführt wird, wobei der Überstand auf der anderen Seite des Metalls durch das Ultraschallnieten derart verbreitert wird, dass eine feste Verbindung zwischen dem Metallelement und dem Kunststoffelement entsteht.

Eine Verbindung zwischen einem Metallelement und einem Kunststoffelement durch Verschweißung kann beispielsweise dadurch erreicht werden, dass von einer Seite das Kunststoffelement an das Metallelement, im Bereich einer Aussparung im Metallelement, angelegt wird und von der anderen Seite ein Kunststoffbefestigungselement mit einem Befestigungsschenkel und einem Sperrschenkel so angelegt wird, dass der Befestigungsschenkel durch die Aussparung mit dem Kunststoffelement in Kontakt gebracht und mit diesem, vorzugsweise mit Hilfe von Ultraschall, verschweißbar ist.

Gemäß einer weiteren besonderen Ausführung der Erfindung ist vorgesehen, dass der Grundkörper aus mindestens zwei einander gegenüber liegenden Metallelementen gebildet wird, die vorzugsweise flache Bleche sind, welche durch ein Kunststoffelement miteinander verbunden und auf Distanz gehalten werden.

Die Metallelemente können beispielsweise einfache, flache, ausgestanzte Blechteile oder tiefgezogene Blechteile oder auch sogenannte "Tailoredblanks" sein. Insbesondere bei der Verwendung von "Tailoredblanks" besteht eine sehr einfache Möglichkeit in den besonders belasteten Bereichen die "Tailoredblanks" so auszugestalten, dass hier ein dickeres Material oder auch eine besondere Legierung mit höherer Festigkeit verwendet wird. Das Metallelement wird auf diese Weise der spezifischen Belastung angepasst.

Der Grundkörper kann beispielsweise H- oder U-Form aufweisen, wobei je nach Festigkeitsanforderungen und Geometrien der Belastung die einzelnen Schenkel teilweise aus Kunststoff oder Metall hergestellt sind.

Erfindungsgemäß kann weiterhin der Grundkörper auch aus einer Mehrzahl von in mehreren, vorzugsweise parallel und/oder senkrecht zueinander ausgerichteten, Ebenen angeordneten Blechen und Kunststoffstrukturen bestehen, die untereinander - in der oben beschriebenen Weise - verbunden sind.

Hierbei kann der Grundkörper ein einziges Kunststoffelement aufweisen, das mindestens zwei, vorzugsweise drei, der Ebenen umfasst, wobei die Bleche die restlichen, vorzugsweise zwei, Ebenen bilden, die vorzugsweise ausschließlich parallel angeordnet sind.

Eine weitere Ausbildungsform des Grundkörpers kann beispielsweise darin bestehen, dass sich dieser Grundkörper aus einem, vorzugsweise metallenen, U-Profil und einem, vorzugsweise aus Kunststoff bestehenden, Verbindungselement, das die freien Schenkel des U-Profils endständig verbindet, zusammensetzt.

Die Erfinder schlagen darüber hinaus vor, dass die verwendeten Kunststoffe zumindest teilweise Faserverstärkungen aufweisen, wobei es sich bei den Faserverstärkungen vorzugsweise um Glasfaser, Kohlefaser oder Aramidfaser handeln kann. Durch diese Faserverstärkung im Kunststoff besteht nun die Möglichkeit die Faseranteile derart zu wählen, dass das Wärmeausdehnungsverhalten der Kunststoffelemente, zumindest im Bereich der üblichen Betriebstemperaturen der Kraftverbindungsstrebe, zumindest weitgehend dem Wärmeausdehnungsverhalten der verwendeten Metallelemente entspricht. Hierdurch wird vermieden, dass aufgrund unterschiedlicher
Wärmeausdehnungskoeffizienten Spannungen in den Verbundteilen entstehen, die über längere Zeit zu Schädigungen der Kraftverbindungsstrebe führen könnten. Außerdem könnte durch ein unterschiedliches Wärmeausdehnungsverhalten eine Verformung eines solchen Verbundteils entstehen oder sich die Charakteristik bezüglich Dämpfung oder Kraftübertragung zu sehr verändern.

Bezüglich der Ausgestaltung der Metallelemente schlagen die Erfinder vor, diese aus Eisen oder Stahl herzustellen. Soll eine besonders leichte Konstruktion erzeugt werden, so können die Metallelemente auch aus Aluminium oder einer Aluminiumlegierung bestehen.

Weiterhin ist es vorteilhaft, die Metallelemente, zumindest so weit sie nicht selbst aus korrosionsbeständigen Material hergestellt sind, mit einem korrosionshemmenden Oberflächenschutz zu versehen. Besonders, wenn die Metallelemente durch Stanzen oder Tiefziehen geformt werden, ist es besonders vorteilhaft, diese zu entgraten, da durch das direkte Aufeinanderliegen von Metall- und Kunststoffelementen die scharfen Grate der Metallelemente zu Schädigungen an den Kunststoffelementen führen können.

Zur zusätzlichen Versteifung der Metallelemente oder auch für zusätzliche Formschlüsse zwischen Metallelementen und Kunststoffelementen können die Metallelemente erfindungsgemäß auch mit Sicken versehen werden.

Des Weiteren kann es vorteilhaft sein, wenn ein Metallelement im Bereich der Verbindung zu einem Kunststoffelement zumindest eine Abwinkelung aufweist, die vorzugsweise in eine Aussparung im damit verbundenen Kunststoffelement eingreift. Durch diese Aussparungen in Verbindung mit den Abwinkelungen können formschlüssige Verbindungen zwischen den Metallelementen und den Kunststoffelementen hergestellt werden. Beispielsweise sind hierdurch Formen erzeugbar, die einer abgeknickten Nut- und Federkonstruktion entsprechen, die eine zusätzliche Verbesserung der Verbindung zwischen den Elementen erreicht.

Schließlich schlagen die Erfinder auch noch vor, dass mindestens ein Kunststoffelement im Bereich der Verbindung zu einem Metallelement zumindest eine Auflagefläche, vorzugsweise in Form eines Steges oder mehrerer Stege, aufweist. Durch diese Ausgestaltung wird erreicht, dass sich einerseits die Montage der Kraftverbindungsstrebe erleichtert, andererseits auch eine bessere Formgenauigkeit erreicht wird, und zusätzlich auftretende Kräfte, insbesondere Verwindungskräfte, abgestützt werden können.

Im Folgenden wird die Erfindung anhand der bevorzugten Ausführungsbeispiele mit Hilfe der Figuren näher beschrieben. Es zeigen im Einzelnen:
- Figuren 1a + 1b: Aufbau einer Kraftverbindungsstrebe im Querschnitt mit Ultraschallvernietung des Kunststoffelementes;
- Figuren 2a + 2b: Aufbau einer Kraftverbindungsstrebe im Querschnitt mit Ultraschallverschweißung des Kunststoffelementes;
- Figur 3: Kraftverbindungsstrebe mit Kunststoff-H-Profil und Metallverbindungsstreben;
- Figur 4: Querschnitt durch eine Kraftverbindungsstrebe als U-Profil ausgebildet;
- Figur 5: Querschnitt durch eine Kraftverbindungsstrebe mit U-Profil aus Metall und verbindendem Kunststoff-Profil der freien Schenkel;
- Figur 6: Draufsicht auf ein metallenes Stanzteil der erfindungsgemäßen Verbindungsstrebe;
- Figur 7: Draufsicht ein tiefgezogenes Metallelement einer Kraftverbindungsstrebe.

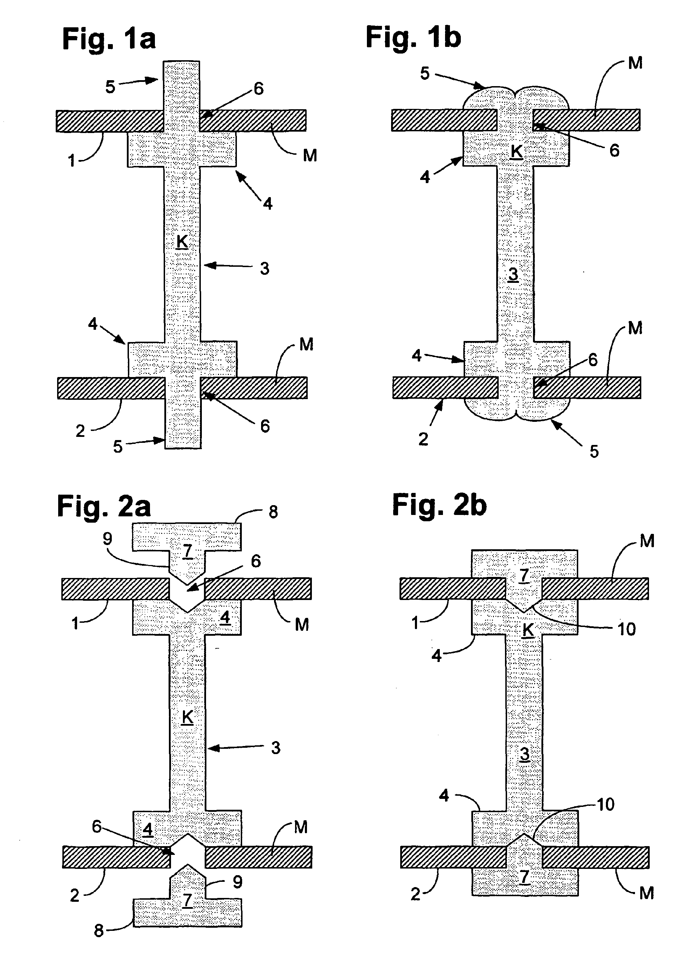

Die Figuren 1a und 1b zeigen einen Querschnitt durch eine erfindungsgemäße Kraftverbindungsstrebe, bestehend aus zwei flachen Tiefziehblechen 1 und 2, die in einem Abstand und parallel zueinander angeordnet sind. Zwischen den beiden Tiefziehblechen, die jeweils über eine gegenüber liegende Aussparung 6 verfügen, ist ein Kunststoffelement 3 angeordnet, welches mit seinen endständigen Zapfen 5 die Aussparungen 6 der beiden Tiefziehbleche 1 und 2 mit ausreichendem Überstand durchdringt. Zusätzlich verfügen die Kunststoffelemente beidseits jeweils über einen Anschlag 4, der für die Einhaltung des Abstandes der Tiefziehbleche sorgt.

Die Figur 1 a zeigt den Zustand der oben genannten Anordnung vor einer Ultraschallvernietung, während die Figur 1b den Zustand nach der Ultraschallvernietung darstellt. Hier sind die Zapfen 5 aufgrund des Einwirkens des Ultraschalls umgeformt worden, haben sich verbreitert und bilden eine formschlüssige Verbindung der Kunststoffelemente 3 mit den beiden Tiefziehblechen 1 und 2. Bei den dargestellten Verbindungen können die Aussparungen 6, durch die die Kunststoffelemente 3 jeweils durchgreifen, entweder an mehreren Punkten mit geringer Ausdehnung angeordnet sein, oder es kann sich auch um Langlöcher handeln, so dass die Ultraschallvernietung über eine längere Strecke hinweg wirksam wird.

Die Figuren 2a und 2b zeigen im Grunde die gleiche Anordnung einer erfindungsgemäßen Kraftverbindungsstrebe mit zwei gegenüber liegenden Tiefziehblechen mit jeweils einer Aussparung 6. Zwischen den Blechen 1 und 2 befindet sich ein Kunststoffelement 3, welches in etwa H-Form aufweist, so dass die Bleche 1 und 2 auf den kurzen Schenkeln aufliegen. Im kurzen Schenkel befindet sich außerdem eine V-förmige Nut, die im Bereich der Aussparungen 6 angeordnet ist.

Die Figur 2a zeigt - im noch gelösten Zustand - zusätzlich zwei etwa T-förmige Kunststoffbefestigungselemente 7, mit je einem Befestigungsschenkel 9 und einem senkrecht dazu angeordneten Sperrschenkel 8, die so angeordnet sind, dass der Befestigungsschenkel 9 durch die Aussparung 6 der Bleche 1 beziehungsweise 2 greift und in direkte Verbindung mit dem Kunststoffelement 3 gebracht werden kann.

In der Figur 2b sind schließlich die beiden Kunststoffbefestigungselemente 7 in die Aussparungen 6 eingeschoben und eine Schweißnaht 10 mit Hilfe von Ultraschallverschweißung zwischen den Befestigungselementen 7 und dem Kunststoffelement 3 hergestellt, so dass sich insgesamt eine stabile Befestigung zwischen den beiden Blechteilen 1 und 2 und dem Kunststoffelement 3 ergibt.

Alle hier gezeigten Blechteile können im Sinne der Erfindung sowohl als Tiefziehbleche, als Stanzbleche, oder auch als "Tailoredblanks" ausgebildet sein. Zusätzlich ist es auch möglich Bleche zu verwenden, die beispielsweise mit Hilfe von Schneidverfahren, wie Laserschneiden, Plasmaschneiden, Wasserstrahlschneiden oder Brennschneiden, hergestellt werden.

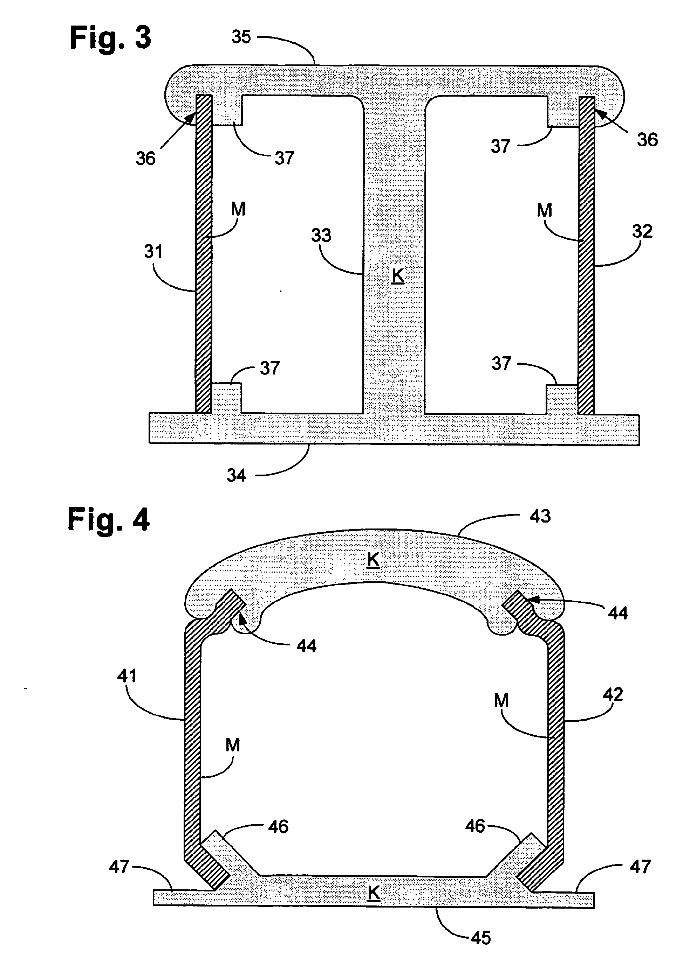

In der Figur 3 ist eine andere Variante eines erfindungsgemäßen Aufbaus einer Kraftverbindungsstrebe dargestellt. Diese besteht aus einem in etwa H-förmigen Kunststoffelement, welches aus dem zentralen Schenkel 33 und den beiden peripheren Schenkel 34 und 35 zusammengesetzt ist. Der zentrale Schenkel 33 ist senkrecht zu den beiden parallel angeordneten peripheren Schenkel 34 und 35 und mit diesen fest verbunden. Der erste periphere Schenkel 34 verfügt auf der Innenseite über jeweils einen Anschlag 37, während der zweite periphere Schenkel 35 randständig zwei Nuten 36 aufweist, die nach innen hin durch zwei Anschläge 37 und nach außen hin durch ein gebogenes Ende des Schenkels selbst begrenzt werden. In diese Nuten 36 sind zwei flache Stanzbleche 31 und 32 eingeschoben, die auf der anderen Seite gegen die Anschläge 37 des ersten peripheren Schenkels 34 anliegen. Wird nun an beiden Seiten der Überstand des ersten peripheren Schenkels des Kunststoff-H-Profils 34 durch Anwendung einer Ultraschall- oder Hitzeumformung der Kontur des gegenüber liegenden Schenkels 35 im Randbereich angepasst, so entsteht eine sehr gute formschlüssige Verbindung zwischen den Kunststoff- und den Metallelementen. Zusätzlich kann der Formschluss dadurch verbessert werden, dass im Bereich der Umformungen Aussparungen oder Sicken in den Metallelementen eingebracht sind.

Die Figur 4 zeigt eine andere erfindungsgemäße Ausbildung einer Kraftverbindungsstrebe im Querschnitt. Diese setzt sich aus zwei randständig angeordneten Tiefziehblechen 41 und 42 und zwei diese verbindende Kunststoffelemente 43 und 45 zusammen. Das oben liegende Kunststoff-Profil 43 weist an seinen beiden Enden jeweils eine Nut 44 auf, in die die beiden Bleche mit ihren gerundet abgewinkelten Enden formschlüssig eingreifen können. Das unten angeordnete Kunststoffelement 45 weist auf seiner Oberseite zwei Laschen 46 auf, die im Winkel von etwa 45° zur Hauptebene des Kunststoffelementes 45 angeordnet sind. Diese sind direkt mit den abgewinkelten Enden der Bleche 41 und 42, beispielsweise durch Ultraschallvernietung oder Ultraschallbördelung, verbunden. Zusätzlich können die freistehenden Laschen 47 ebenfalls umgeformt werden, so dass eine noch bessere formschlüssige Verbindung zu den Blechteilen 41 und 42 entsteht. Auch hier können die Blechteile 41 und 42 im Bereich der Verbindungen über Sicken und/oder Aussparungen verfügen, um eine Optimierung des Formschlusses zwischen den einzelnen zusammengefügten Teilen zu erreichen. Auch kann es von Vorteil sein, die Bleche in sonstigen, nicht mit anderen Teilen in Verbindung stehenden Bereichen durch Sicken oder entsprechende Formgebung, zum Beispiel während des Tiefziehens, zu versehen, so dass eine erhöhte Verwindungssteifigkeit auftritt.

Es ist noch darauf hinzuweisen, dass das Kunststoffelement 43 aus der Figur 4 eine gewölbte Form aufweist und dadurch besonders hohe radiale Belastungen aufnehmen kann.

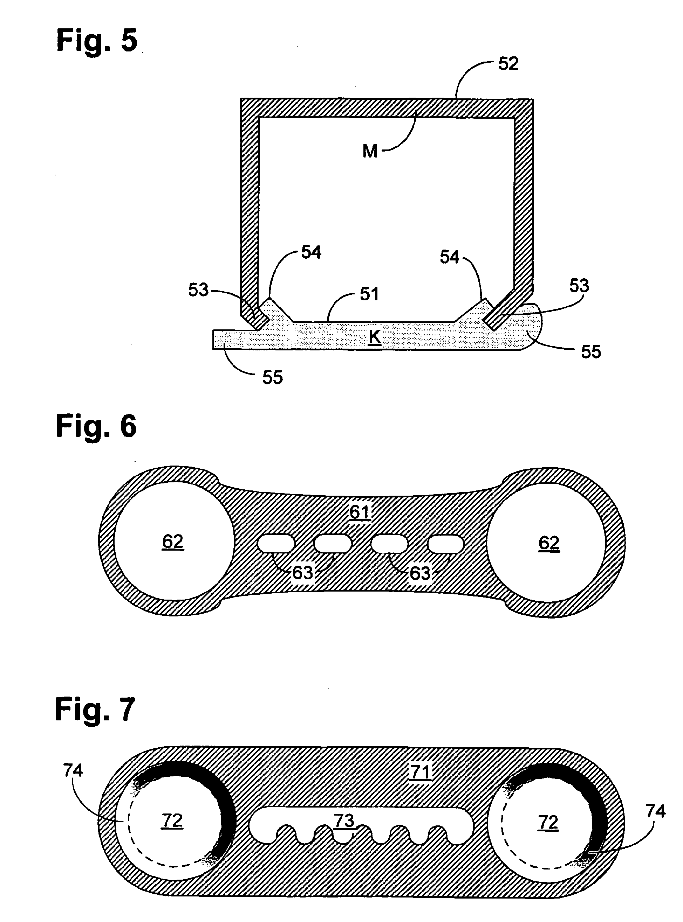

Die Figur 5 zeigt schließlich eine vereinfachte Form des Kraftverbindungselementes aus Figur 4. Hier wird ein metallenes U-Profil 52 an seinen freien Enden 53 jeweils schräg abgekantet. Zur Schließung des U-Profils wird ein Kunststoffelement 51, welches an seinen Enden jeweils über eine ebenfalls abgewinkelte innere Lasche 54 verfügt, formschlüssig angesetzt und anschließend die äußere Lasche 55 durch Einwirkung von Ultraschall oder Hitze formschlüssig umgeformt, so dass eine feste Verbindung zwischen dem metallenen U-Profil 52 und dem Kunststoffelement 51 entsteht. Auch hier gilt, dass die Anbringung von entsprechenden Aussparungen oder Sicken im Verbindungsbereich zur Festigung der Verbindung förderlich sind.

Die Figuren 6 und 7 zeigen schließlich zwei Ausgestaltungsformen von den oben erwähnten Metallelementen. Bei der Figur 6 handelt es sich um ein flaches Stanzteil 61, welches an beiden Enden über eine Öffnung 62 verfügt, in die eine Lageraufnahme, beispielsweise durch eine Hülse, eingesetzt werden kann, wobei zwei solcher Stanzteile, zum Beispiel wie in den Figuren 1a und 1b beziehungsweise 2a und 2b gezeigt, zu einer Kraftverbindungsstrebe zusammengesetzt werden können. Die gezeigten Aussparungen 63 dienen hierbei dazu, das zwischen den Metallelementen angeordnete Kunststoffteil durch Ultraschallnieten oder Ultraschallschweißen mit dem Metallelement zu verbinden.

Eine ähnliche Ausführung eines Metallelementes 71 ist in der Figur 7 gezeigt. Dieses verfügt ebenfalls auf beiden Seiten über eine Öffnung 72, die - angedeutet durch die gestrichelten Kreise - über eine Tiefziehhülse für die Lageraufnahme verfügen. Zusätzlich ist in diesem Tiefziehblech zwischen den Öffnungen 72 ein Langloch 73 vorgesehen, welches ebenfalls zur Erzeugung der Verbindung mit einem Kunststoffelement vorgesehen ist. Beispielhaft ist auf der Oberseite eine flache Linienführung der Wandung des Langloches 73 angedeutet, während auf der Unterseite ein wellenförmiger Verlauf der Seitenbleche des Langloches 73 dargestellt ist. Beide Ausführungen können verwendet werden, wobei die wellenförmige Seitenwand für einen verbesserten Formschluss in Längsrichtung sorgt, jedoch zusätzlichen Aufwand der Formgestaltung des Kunststoffelementes erfordert.

In den zuvor gezeigten Figuren sind die aus Kunststoff hergestellten Teile zusätzlich mit K bezeichnet und gepunktet dargestellt, während die aus Metall bestehenden Teile mit M markiert und schräg schraffiert gezeichnet sind.

Insgesamt wird also mit dem erfindungsgemäßen Aufbau einer Kraftverbindungsstrebe eines Fahrwerks eines Kraftfahrzeuges eine kraftschlüssige Verbindung zwischen einem Chassis und einem Radträger erreicht. Derartige Streben sind einerseits sehr gewichtssparend herzustellen und aufgrund der Einfachheit der verwendeten Einzelelemente auch sehr kostengünstig herzustellen.

### Bezugszeichenliste

- 1: Erstes Tiefziehblech
- 2: Zweites Tiefziehblech
- 3: Kunststoffelement
- 4: Anschlag
- 5: Zapfen
- 6: Aussparung
- 7: Kunststoffbefestigungselement
- 8: Sperrschenkel
- 9: Befestigungsschenkel
- 10: Schweißnaht
- 31: Stanzblech
- 32: Stanzblech
- 33: Zentraler Schenkel des Kunststoff-H-Profils
- 34: Erster peripherer Schenkel des Kunststoff-H-Profils
- 35: Zweiter peripherer Schenkel des Kunststoff-H-Profils
- 36: Nut
- 37: Anschlag
- 41: Tiefziehblech
- 42: Tiefziehblech
- 43: Kunststoffelement
- 44: Nut
- 45: Kunststoffelement
- 46: Lasche
- 47: Lasche
- 51: Kunststoffelement
- 52: U-Profil aus Metall
- 53: Abgekantetes Ende des U-Profils
- 54: Innere Kunststoff-Lasche
- 55: Äußere Kunststoff-Lasche
- 61: Gestanztes Blechelement

### Fortsetzung der Bezugszeichenliste

- 62: Öffnung für Lageraufnahme
- 63: Aussparung
- 71: Tiefziehblech
- 72: Aussparung für Lageraufnahme
- 73: Aussparung / Langloch
- 74: Tiefgezogene Hülse für Lageraufnahme

## Patentansprüche

1. Kraftverbindungsstrebe eines Fahrwerks eines Kraftfahrzeuges mit einem länglichen Grundkörper und mindestens zwei endständigen Lageraufnahmen zur Ein- und Ausleitung von Kräften, wobei der Grundkörper aus wenigstens einem Element (3) aus Kunststoff (K) und mindestens einem Element (1, 2) aus Metall (M) zusammengesetzt ist und die Verbindung zwischen den Metallelementen (1, 2) und den Kunststoffelementen (3) durch eine Umformung eines Teils der Kunststoffelemente (5, 9) gebildet ist.

2. Kraftverbindungsstrebe gemäß dem voranstehenden Patentanspruch 1, **dadurch gekennzeichnet, dass** mindestens ein Metallelement (1, 2), vorzugsweise alle Metallelemente, den Abstand zwischen mindestens zwei, vorzugsweise allen Lageraufnahmen überbrückt / überbrücken, sich vorzugsweise über mindestens eine, vorzugsweise alle, Lageraufnahme(n) erstreckt.

3. Kraftverbindungsstrebe gemäß einem der voranstehenden Patentansprüche, **dadurch gekennzeichnet, dass** bei mindestens einer Verbindung als Umformung Ultraschallnieten oder Ultraschallbördeln verwendet wird.

4. Kraftverbindungsstrebe gemäß einem der voranstehenden Patentansprüche, **dadurch gekennzeichnet, dass** die Verbindung mindestens eines Metallelementes zu einem Kunststoffelement (3) durch einen Kunststoffzapfen (5) erreicht wird, der eine Aussparung (6) in einem Metallelement (1, 2) von einer Seite durchdringt und auf der anderen Seite derart verbreitert wird, dass eine feste Verbindung entsteht.

5. Kraftverbindungsstrebe gemäß einem der voranstehenden Patentansprüche, **dadurch gekennzeichnet, dass** die Verbindung mindestens eines Metallelementes (1, 2) zu einem Kunststoffelement (3) **dadurch** erreicht wird, dass von einer Seite das Kunststoffelement (3) an das Metallelement im Bereich einer Aussparung (6) im Metallelement (1, 2) angelegt wird und von der anderen Seite ein Kunststoffbefestigungselement (7), welches einen Befestigungsschenkel (9) und einem Sperrschenkel (8) aufweist, mit dem Befestigungsschenkel (9) durch die Aussparung (6) mit dem Kunststoffelement (3) in Kontakt gebracht und mit diesem verschweißt wird.

6. Kraftverbindungsstrebe gemäß einem der voranstehenden Patentansprüche, **dadurch gekennzeichnet, dass** der Grundkörper aus mindestens zwei gegenüberliegenden Metallelementen (1, 2), vorzugsweise flachen Blechen, gebildet wird, die durch ein Kunststoffelement (3), vorzugsweise einen Kunststoffsteg, miteinander verbunden und auf Distanz gehalten werden.

7. Kraftverbindungsstrebe gemäß einem der voranstehenden Patentansprüche, **dadurch gekennzeichnet, dass** mindestens ein Metallelement (1, 2) ein ausgestanztes Blechteil ist.

8. Kraftverbindungsstrebe gemäß einem der voranstehenden Patentansprüche, **dadurch gekennzeichnet, dass** mindestens ein Metallelement (1, 2) ein tiefgezogenes Blechteil ist.

9. Kraftverbindungsstrebe gemäß einem der voranstehenden Patentansprüche, **dadurch gekennzeichnet, dass** mindestens ein Metallelement (1, 2) ein Tailoredblank oder Tailoredstrip ist.

10. Kraftverbindungsstrebe gemäß dem voranstehenden Patentanspruch 9, **dadurch gekennzeichnet, dass** der Grundkörper eine H- oder U-Form aufweist.

11. Kraftverbindungsstrebe gemäß einem der voranstehenden Patentansprüche 1 bis 10, **dadurch gekennzeichnet, dass** der Grundkörper aus einer Mehrzahl von in mehreren, vorzugsweise parallel und/oder senkrecht zueinander ausgerichteten, Ebenen angeordneten Blechen (1, 2) und Kunststoffstrukturen (3) besteht, die untereinander verbunden sind.

12. Kraftverbindungsstrebe gemäß dem voranstehenden Patentanspruch 11, **dadurch gekennzeichnet, dass** der Grundkörper ein einziges Kunststoffelement (33, 34, 35) aufweist, das mindestens zwei, vorzugsweise drei der Ebenen umfasst und die Bleche (31, 32) die restlichen, vorzugsweise zwei Ebenen bilden, die vorzugsweise ausschließlich parallel angeordnet sind.

13. Kraftverbindungsstrebe gemäß einem der voranstehenden Patentansprüche 1 bis 9, **dadurch gekennzeichnet, dass** sich der Grundkörper aus einem, vorzugsweise metallenen U-Profil (52) und einem, vorzugsweise aus Kunststoff bestehenden Verbindungselement (51), das die freien Schenkel des U-Profils (52) endständig verbindet, besteht.

14. Kraftverbindungsstrebe gemäß einem der voranstehenden Patentansprüche, **dadurch gekennzeichnet, dass** die verwendeten Kunststoffelemente (3) zumindest teilweise Faserverstärkungen, vorzugsweise Glasfaser, Kohlefaser oder Aramidfaser, aufweisen.

15. Kraftverbindungsstrebe gemäß dem voranstehenden Patentanspruch 14, **dadurch gekennzeichnet, dass** die Faseranteile der Faserverstärkungen derart gewählt werden, dass das Wärmeausdehnungsverhalten der Kunststoffelemente, zumindest im Bereich der Betriebstemperaturen, zumindest weitgehend dem Wärmeausdehnungsverhalten der verwendeten Metallelemente entspricht.

16. Kraftverbindungsstrebe gemäß einem der voranstehenden Patentansprüche, **dadurch gekennzeichnet, dass** mindestens ein Metallelement (1, 2) aus Stahl oder einer Eisenbasislegierung besteht.

17. Kraftverbindungsstrebe gemäß einem der voranstehenden Patentansprüche, **dadurch gekennzeichnet, dass** mindestens ein Metallelement (1, 2) aus Aluminium oder einer Aluminiumlegierung besteht.

18. Kraftverbindungsstrebe gemäß einem der voranstehenden Patentansprüche, **dadurch gekennzeichnet, dass** mindestens ein Metallelement (1, 2) einen korrosionshemmenden Oberflächenschutz aufweist.

19. Kraftverbindungsstrebe gemäß einem der voranstehenden Patentansprüche, **dadurch gekennzeichnet, dass** mindestens ein Metallelement (1, 2), vorzugsweise alle Metallelemente, entgratet ist/sind.

20. Kraftverbindungsstrebe gemäß einem der voranstehenden Patentansprüche, **dadurch gekennzeichnet, dass** mindestens ein Metallelement (1, 2) Sicken aufweist.

21. Kraftverbindungsstrebe gemäß einem der voranstehenden Patentansprüche, **dadurch gekennzeichnet, dass** mindestens ein Metallelement (41, 42) im Bereich der Verbindung zu einem Kunststoffelement (43, 45) zumindest eine Abwinkelung aufweist, die vorzugsweise in eine Nut (44) im damit verbundenen Kunststoffelement eingreift.

22. Kraftverbindungsstrebe gemäß einem der voranstehenden Patentansprüche, **dadurch gekennzeichnet, dass** mindestens ein Kunststoffelement (34, 35) im Bereich der Verbindung zu einem Metallelement (31, 32) zumindest eine Auflagefläche (37), vorzugsweise in Form eines Steges oder mehrerer Stege, aufweist.

## Claims

1. Force connection strut of a chassis of a motor vehicle with an elongate base body and at least two terminal bearing seats for introducing and diverting forces, wherein the base body is composed of at least one element (3) of a plastics material (K) and at least one element (1, 2) of metal (M) and the connection between the metal elements (1, 2) and the plastics elements (3) is formed by shaping a part of the plastics elements (5, 9).

2. Force connection strut according to the preceding Claim 1, **characterised in that** at least one metal element (1, 2), preferably all metal elements, bridges/bridge the spacing between at least two, preferably all bearing seats, preferably extending over at least one, preferably all bearing seat (s).

3. Force connection strut according to either of the preceding Claims, **characterised in that** ultrasonic riveting or ultrasonic welding is used as shaping for at least one connection.

4. Force connection strut according to any one of the preceding Claims, **characterised in that** the connection between at least one metal element and a plastics element (3) is achieved by a plastics pin (5) which passes through an opening (6) in a metal element (1, 2) from one side and is widened on the other side such that a firm connection is obtained.

5. Force connection strut according to any one of the preceding Claims, **characterised in that** the connection between at least one metal element (1, 2) and a plastics element (3) is achieved by applying the plastics element (3) to the metal element from one side in the region of an opening (6) in the metal element (1, 2) and bringing a plastics fastening element (7), which comprises a fastening limb (9) and a locking limb (8), by way of the fastening limb (9) through the opening (6) from the other side into contact with the plastics element (3) and welding it to the latter.

6. Force connection strut according to any one of the preceding Claims, **characterised in that** the base body is formed from at least two opposite metal elements (1, 2), preferably flat metal sheets, which are connected together and held at a distance by a plastics element (3), preferably a plastics web.

7. Force connection strut according to any one of the preceding Claims, **characterised in that** at least one metal element (1, 2) is a stamped-out sheet metal part.

8. Force connection strut according to any one of the preceding Claims, **characterised in that** at least one metal element (1, 2) is a deep-drawn sheet metal part.

9. Force connection strut according to any one of the preceding Claims, **characterised in that** at least one metal element (1, 2) is a tailored blank or tailored strip.

10. Force connection strut according to the preceding Claim 9, **characterised in that** the base body is in the shape of an H or a U.

11. Force connection strut according to any one of the preceding Claims 1 to 10, **characterised in that** the base body consists of a plurality of metal sheets (1, 2) and plastics structures (3) which are disposed in a plurality of planes preferably oriented parallel and/or perpendicularly to one another and which are connected together.

12. Force connection strut according to the preceding Claim 11, **characterised in that** the base body comprises a single plastics element (33, 34, 35) encompassing at least two, preferably three of the planes, and the metal sheets (31, 32) form the remaining, preferably two planes, which are preferably disposed solely in parallel.

13. Force connection strut according to any one of the preceding Claims 1 to 9, **characterised in that** the base body consists of one, preferably metal U-section (52) and one connecting element (51) which preferably consists of a plastics material and connects the free limbs of the U-section (52) at the ends.

14. Force connection strut according to any one of the preceding Claims, **characterised in that** the plastics elements (3) which are used comprise fibre reinforcements, at least in part, preferably glass fibres, carbon fibres or aramide fibres.

15. Force connection strut according to the preceding Claim 14, **characterised in that** the fibre proportions of the fibre reinforcements are selected such that the thermal expansion behaviour of the plastics elements, at least in the range of the operating temperatures, corresponds at least largely to the thermal expansion behaviour of the metal elements which are used.

16. Force connection strut according to any one of the preceding Claims, **characterised in that** at least one metal element (1, 2) consists of steel or an iron base alloy.

17. Force connection strut according to any one of the preceding Claims, **characterised in that** at least one metal element (1, 2) consists of aluminium or an aluminium alloy.

18. Force connection strut according to any one of the preceding Claims, **characterised in that** at least one metal element (1, 2) comprises a corrosion-inhibiting surface protection.

19. Force connection strut according to any one of the preceding Claims, **characterised in that** at least one metal element (1, 2), preferably all metal elements, is/are deburred.

20. Force connection strut according to any one of the preceding Claims, **characterised in that** at least one metal element (1, 2) comprises beads.

21. Force connection strut according to any one of the preceding Claims, **characterised in that** at least one metal element (41, 42) comprises at least one bend in the region of the connection with a plastics element (43, 45), this bend preferably engaging in a groove (44) in the plastics element connected thereto.

22. Force connection strut according to any one of the preceding Claims, **characterised in that** at least one plastics element (34, 35) comprises at least one contact face (37), preferably in the form of a web or a plurality of webs, in the region of the connection with a metal element (31, 32).

## Revendications

1. Jambe de force d'un châssis d'un véhicule automobile comportant un corps de base allongé et au moins deux logements de support d'extrémité pour l'encaissement et l'application de forces, dans lequel le corps de base est constitué par au moins un élément (3) formé d'une matière plastique (K) et par au moins un élément (1, 2) formé d'un métal (M), et la liaison entre les éléments métalliques (1, 2) et les éléments en matière plastique (3) est formée par une déformation d'une partie des éléments en matière plastique (5, 9).

2. Jambe de force selon la revendication précédente 1, **caractérisée en ce qu'**au moins un élément métallique (1, 2) et de préférence tous les éléments métalliques s'étendent sur la distance comprise entre au moins deux et de préférence tous les logements de support, de préférence au-dessus d'au moins un et de préférence au-dessus de tous les logements de support.

3. Jambe de force selon l'une des revendications précédentes, **caractérisée en ce que** pour au moins une liaison, en tant que déformation on utilise un rivetage à ultrasons ou un bordage à ultrasons.

4. Jambe de force selon l'une des revendications précédentes, **caractérisée en ce que** la liaison entre au moins un élément métallique et un élément en matière plastique (3) est obtenue au moyen d'un embout en matière plastique (5), qui traverse un évidement (6) formé dans un élément métallique (1, 2) à partir d'un côté et s'élargit de l'autre côté de telle sorte qu'on obtient une liaison rigide.

5. Jambe de force selon l'une des revendications précédentes, **caractérisée en ce que** la liaison entre au moins un élément métallique (1, 2) et un élément en matière plastique (3) est obtenue par le fait qu'à partir d'un côté l'élément en matière plastique (3) s'applique contre l'élément métallique dans la zone d'un évidement (6) formé dans l'élément métallique (1, 2) et que de l'autre côté, un élément de fixation en matière plastique (7), qui comporte une branche de fixation (9) et une branche de blocage (8), est placé, au moyen de la branche de fixation (9) traversant l'évidement (6), en contact avec l'élément en matière plastique (3) et est soudé à ce dernier.

6. Jambe de force selon l'une des revendications précédentes, **caractérisée en ce que** le corps de base est formé par au moins deux éléments métalliques en vis-à-vis (1, 2), qui sont reliés entre eux et maintenus à distance par un élément en matière plastique (3), de préférence une barrette en matière plastique.

7. Jambe de force selon l'une des revendications précédentes, **caractérisée en ce qu'**au moins un élément métallique (1, 2) est une pièce en tôle découpée.

8. Jambe de force selon l'une des revendications précédentes, **caractérisée en ce qu'**au moins un élément métallique (1, 2) est une pièce en tôle emboutie.

9. Jambe de force selon l'une des revendications précédentes, **caractérisée en ce qu'**au moins un élément métallique (1, 2) est une ébauche tailoredblank ou une bande tailoredstrip.

10. Jambe de force selon la revendication précédente 9, **caractérisée en ce que** le corps de base possède une forme en H ou en U.

11. Jambe de force selon l'une des revendications précédentes 1 à 10, **caractérisée en ce que** le corps de base est constitué par une multiplicité de tôles (1, 2) et de structures en matière plastique (3), qui sont disposées dans plusieurs plans orientés de préférence parallèlement et/ou perpendiculairement entre eux et qui sont reliées entre elles.

12. Jambe de force selon la revendication précédente 11, **caractérisée en ce que** le corps de base comporte un seul élément en matière plastique (33, 34, 35), qui comprend au moins deux et de préférence trois des plans et que les tôles (31, 32) forment les autres plans, de préférence deux plans, qui sont disposés de préférence exclusivement en parallèle.

13. Jambe de force selon l'une des revendications précédentes 1 à 9, **caractérisée en ce que** le corps de base est constitué par un profilé en U (52) de préférence métallique et par un élément de liaison (51) réalisé de préférence en matière plastique et qui relie, au niveau des extrémités, les branches libres du profilé en U (52).

14. Jambe de force selon l'une des revendications précédentes, **caractérisée en ce que** les éléments en matière plastique (3) utilisée comportent au moins partiellement des renforcements formés de fibres, de préférence des fibres de verre, des fibres de carbone ou des fibres d'aramide.

15. Jambe de force selon la revendication précédente 14, **caractérisée en ce que** les pourcentages de fibres des renforts formés de fibres sont choisis de telle sorte qu'au moins dans la gamme des températures de fonctionnement, le comportement de dilatation thermique des éléments en matière plastique correspond, au moins dans une large mesure au comportement de dilatation thermique des éléments métalliques utilisés.

16. Jambe de force selon l'une des revendications précédentes, **caractérisée en ce qu'**au moins un élément métallique (1, 2) est réalisé en acier ou en un alliage à base de fer.

17. Jambe de force selon l'une des revendications précédentes, **caractérisée en ce qu'**au moins un élément métallique (1, 2) est réalisé en aluminium ou en un alliage d'aluminium.

18. Jambe de force selon l'une des revendications précédentes, **caractérisée en ce qu'**au moins un élément métallique (1, 2) possède une protection de surface empêchant la corrosion.

19. Jambe de force selon l'une des revendications précédentes, **caractérisée en ce qu'**au moins un élément métallique (1, 2) et de préférence tous les éléments métalliques sont ébavurés.

20. Jambe de force selon l'une des revendications précédentes, **caractérisée en ce qu'**au moins un élément métallique (1, 2) comporte des moulures.

21. Jambe de force selon l'une des revendications précédentes, **caractérisée en ce qu'**au moins un élément métallique (41, 42) comporte, dans la zone de la liaison avec l'élément en matière plastique (43, 45), au moins une partie coudée, qui s'engage de préférence dans une rainure (44) formée dans l'élément en matière plastique qui y est lié.

22. Jambe de force selon l'une des revendications précédentes, **caractérisée en ce que** le au moins un élément en matière plastique (34, 35) comporte, dans la zone de liaison avec un élément métallique (31, 32), au moins une surface d'appui (37), de préférence sous la forme d'une barrette ou de plusieurs barrettes.
